# FASCICULE DE BREVET EUROPEEN

(11) **EP 2 414 241 B1**
(45) Date de publication et mention de la délivrance du brevet: **06.03.2019**
(21) Numéro de dépôt: 10717687.7
(22) Date de dépôt: 30.03.2010
(51) Int. Cl.: B64G 1/40, B64G 5/00

(54) **DISPOSITIF DE SÉPARATION DES DEUX PARTIES D'UN MODULE D'AVITAILLEMENT DE LANCEUR**
VORRICHTUNG ZUM TRENNEN DER BEIDEN TEILE EINES STARTERBETANKUNGSMODULS
DEVICE FOR SEPARATING THE TWO PORTIONS OF A LAUNCHER REFUELING MODULE

(30) Priorité: 31.03.2009 FR 0952016
(43) Date de publication de la demande: 08.02.2012
(73) Titulaire: Safran Aircraft Engines, 75015 Paris (FR)
(72) Inventeur: MALAPEL, Aliénor, F-77115 Blandy les Tours (FR); DESCHAMPS, Mickaël, F- 27200 Vernon (FR); VERDIER, Georges, F-27510 Tourny (FR); PATTYN, Jean-Luc, F-27600 Gaillon (FR)
(74) Mandataire: Henrich, Christel
(86) Numéro de dépôt international: PCT/FR2010/050595
(87) Numéro de publication internationale: WO 2010/112764

(56) Documents cités:
- EP-A1- 0 371 867
- FR-A1- 2 685 903
- US-A- 2 533 640
- US-A- 2 962 934
- US-A- 3 242 811

## Description

L'invention concerne un dispositif de séparation des parties Bord et Sol d'un module d'avitaillement de lanceur. Plus particulièrement, l'invention concerne un dispositif permettant de séparer les parties Bord et Sol du module d'avitaillement d'un lanceur, après que le lanceur a amorcé son déplacement vertical.

Les lanceurs sont approvisionnés en ergols par l'intermédiaire de modules d'avitaillement, constitués d'une partie Bord, liée au lanceur, et d'une partie Sol, liée à la base de lancement. Ces deux parties doivent être aptes à se séparer après avitaillement du lanceur, afin de ne pas entraver l'élévation verticale de celui-ci.

Les systèmes connus de séparation des parties Bord et Sol d'un module d'avitaillement, également appelés plaques à clapets, mettent en oeuvre des vérins à hélium ou des électrovannes, actionnés par des systèmes de commandes électriques émanant du lanceur ou de la base de lancement. De telles commandes électriques ne peuvent être transmises, par la base de lancement ou par le lanceur, qu'avant allumage des moteurs de propulsion, de sorte que les parties Bord et Sol du module d'avitaillement doivent être séparées préalablement à cet allumage, au cours d'une période appelée « temps chronologique négatif ». Par conséquent, il est impératif d'assurer et de vérifier la séparation effective des parties bord et sol du module d'avitaillement avant élévation du lanceur. Par ailleurs, en cas de tir avorté et en particulier en cas de panne des moteurs, il est nécessaire de vidanger les réservoirs via un module de secours, moins performant et moins rapide, qui génère des sollicitations supplémentaires sur d'autres équipements du lanceur. Enfin, les plaques à clapets ont un fonctionnement irréversible, qui nécessite impérativement de les remplacer avant d'engager une nouvelle chronologie de lancement.

Le document US 2,962,934 décrit toutes les caractéristiques techniques du préambule de la revendication 1.

Les systèmes connus présentent donc des inconvénients majeurs en termes de coûts et d'efficacité.

La présente invention se propose de simplifier les dispositifs connus de séparation des parties Bord et Sol du module d'avitaillement d'un lanceur, et de limiter les contraintes liées à la séparation de ces parties de module dans le cas d'un tir avorté.

En premier lieu, ce but est atteint avec un dispositif de séparation des parties Bord et Sol d'un module d'avitaillement de lanceur tel que défini à la revendication 1. Ce dispositif comprend un système de verrouillage comportant un doigt de verrouillage monté sur la partie Sol et présentant une portion de blocage, et un axe de verrouillage sur la partie Bord, coopérant par engagement avec la portion de blocage afin de maintenir la partie Bord et la partie Sol dans une position de verrouillage, ainsi qu'un système d'actionnement qui, sous le déplacement vertical du lanceur, permet de désengager la portion de blocage de l'axe de verrouillage, ce par quoi la partie Bord est apte à être séparée de la partie Sol. En outre, le système d'actionnement comporte un premier moyen d'actionnement et un second moyen d'actionnement, le second moyen d'actionnement étant actionné à la suite du premier moyen d'actionnement.

Grâce à ces dispositions, les parties Bord et Sol du module d'avitaillement sont déconnectées sous l'effet du déplacement vertical du lanceur, c'est-à-dire après allumage des moteurs de propulsion. Ainsi, en cas de défaillance des moteurs de propulsion ou en cas de tir avorté, les parties Bord et Sol restent solidaires l'une de l'autre et peuvent être à nouveau sollicitées lors d'un essai ultérieur. Il n'est donc pas nécessaire de vidanger les réservoirs, ni de remplacer une partie du module d'avitaillement, comme dans le cas des techniques connues actuellement.

Selon un aspect avantageux de l'invention, le second moyen d'actionnement permet, à lui-seul, de désengager la portion de blocage de l'axe de verrouillage, ce par quoi il constitue un élément de sécurité assurant la séparation des deux parties du module d'avitaillement du lanceur. Comme le second moyen d'actionnement est actionné à la suite du premier, il constitue un élément de sécurité assurant la séparation des deux parties du module d'avitaillement y compris dans le cas d'un disfonctionnement ou d'un blocage du premier moyen d'actionnement. Le dispositif de séparation des parties bord et sol du module d'avitaillement est donc plus fiable.

Selon l'invention, le premier et le second moyen d'actionnement permettent, indépendamment l'un de l'autre, de désengager la portion de blocage de l'axe de verrouillage.

Selon un aspect de l'invention, le système d'actionnement comporte un levier d'entraînement monté pivotant sur la partie Sol et le doigt de verrouillage est monté pivotant sur la partie Sol, le pivotement du levier étant apte à entraîner le pivotement du doigt de verrouillage, désengageant ainsi la portion de blocage de l'axe de verrouillage solidaire de la partie bord.

Selon un autre aspect de l'invention, le doigt de verrouillage est constitué d'un premier segment monté sur la partie Sol et d'un second segment comportant ladite portion de blocage, le premier et le second segment étant reliés par l'intermédiaire d'un élément de liaison.

Selon un autre aspect de l'invention, le système d'actionnement comporte un levier d'extraction monté pivotant sur la partie Sol et comportant une fourche coopérant avec l'élément de liaison du doigt de verrouillage de manière à forcer le mouvement de l'élément de liaison lors de l'actionnement du levier d'extraction et à extraire l'élément de liaison du doigt de verrouillage, ce par quoi le premier et le second segment du doigt de verrouillage peuvent être désolidarisés l'un de l'autre.

Selon une disposition avantageuse, la fourche présente une fente dans laquelle est engagée une portion médiane de l'élément de liaison, et l'élément de liaison est cassable ou amovible et comporte, à son extrémité inférieure, une portion d'extrémité élargie faisant saillie du côté inférieur de la fourche.

Selon un autre aspect de l'invention, le système d'actionnement est relié à la base de lancement par l'intermédiaire d'un câble, et est apte à être actionné sous l'effet de la traction du câble lorsque le lanceur se déplace verticalement d'une distance prédéterminée. Le dispositif de séparation selon l'invention est actionné mécaniquement, ce qui lui permet d'être actionné après déclenchement des moteurs de propulsion.

Selon un aspect avantageux de l'invention, le premier moyen d'actionnement est sous la forme d'un levier d'entraînement et le second moyen d'actionnement est sous la forme d'un levier d'extraction.

Selon un exemple de réalisation, le levier d'entraînement est monté pivotant sur la partie Sol et le doigt de verrouillage est constitué d'un premier segment monté pivotant sur la partie Sol et d'un second segment comportant ladite portion de blocage, le premier et le second segment étant reliés par l'intermédiaire d'un élément de liaison. Le pivotement du levier d'entraînement est apte à entraîner le pivotement du doigt de verrouillage, désengageant ainsi la portion de blocage de l'axe de verrouillage. Le levier d'extraction est monté pivotant sur la partie Sol et comporte une fourche coopérant avec l'élément de liaison du doigt de verrouillage de manière à forcer le mouvement vertical de l'élément de liaison lors de l'actionnement du levier d'extraction et à extraire l'élément de liaison du doigt de verrouillage, ce par quoi le premier et le second segment du doigt de verrouillage peuvent être désolidarisés l'un de l'autre.

Selon un aspect de l'invention, la fourche présente une fente dans laquelle est engagée une portion médiane de l'élément de liaison, et l'élément de liaison est cassable ou amovible et comporte, à son extrémité inférieure, une portion d'extrémité élargie faisant saillie du côté inférieur de la fourche, l'actionnement du levier d'extraction permettant de retirer l'élément de liaison du doigt de verrouillage et de libérer ainsi la liaison entre le second segment du doigt de verrouillage et la partie Sol du module.

Par exemple, l'élément de liaison peut être une goupille. La portion d'extrémité élargie peut alors être constituée par un écrou vissé à l'extrémité inférieure de ladite goupille.

Avantageusement, la goupille comporte une tête assurant son positionnement entre les deux segments du doigt de verrouillage et apte à être rompue lorsque la goupille est extraite du doigt de verrouillage.

Selon un autre aspect de l'invention, la surface inférieure de la fourche du levier d'extraction présente une forme bombée, permettant le pivotement de l'élément de liaison dans le cas de l'actionnement du levier d'entraînement préalablement à celui du levier d'extraction.

Selon un autre aspect de l'invention, le dispositif de séparation comporte un système de positionnement des deux parties Bord et Sol du module entre elles, sous forme d'éprouvettes de maintien fixées aux deux parties du module et à aptes à être rompues lors de la séparation des deux parties du module. Une zone de pivotement peut par ailleurs être prévue sur les parties basses de la partie bord et de la partie sol, ladite zone de pivotement comportant une première portion de pivotement formée sur la partie Bord et une seconde portion de pivotement formée sur la partie Sol et le contact entre la première portion de pivotement et la seconde portion de pivotement permettant une rotation et/ou une translation relative de la partie sol par rapport à la partie bord du module.

L'invention concerne en outre un procédé de séparation des parties Bord et Sol d'un module d'avitaillement de lanceur au moyen du système de séparation selon l'invention, et comportant les étapes suivantes :
a) amorcer le déplacement vertical du lanceur,
b) enclencher le système d'actionnement sous l'effet du déplacement vertical du lanceur,
c) désengager la portion de blocage de l'axe de verrouillage,
d) poursuivre le déplacement vertical du lanceur, ce par quoi la partie Bord et la partie Sol du module se séparent.

Pour enclencher le système d'actionnement et désengager la portion de blocage de l'axe de verrouillage, on peut par exemple actionner le levier d'entraînement sous l'effet de la force de traction du câble, lorsque le lanceur s'est élevé d'une distance prédéterminée (étape e), puis faire pivoter le doigt de verrouillage suffisamment pour désengager la portion de blocage de l'axe de verrouillage (étape f).

Selon une variante du procédé, on peut actionner le levier d'extraction sous l'effet de la force de traction du câble, lorsque le lanceur s'est élevé d'une distance prédéterminée (étape g), puis forcer le mouvement de l'élément de liaison par pivotement du levier d'extraction jusqu'à retirer complètement l'élément de liaison du doigt de verrouillage (étape h).

Selon un autre aspect, l'invention concerne un procédé de séparation des parties Bord et Sol d'un module d'avitaillement de lanceur au moyen d'un système de séparation tel que précédemment décrit, et comportant les étapes suivantes :
a) amorcer le déplacement vertical du lanceur,
e) actionner le levier d'entraînement sous l'effet de la force de traction du câble, lorsque le lanceur s'est élevé d'une première distance prédéterminée, de manière à faire pivoter le doigt de verrouillage, g) actionner le levier d'extraction sous l'effet de la force de traction du câble, lorsque le lanceur s'est élevé d'une seconde distance prédéterminée supérieure à la première distance,
h) forcer le mouvement de l'élément de liaison par pivotement du levier d'extraction jusqu'à retirer complètement l'élément de liaison du doigt de verrouillage,
d) poursuivre le déplacement vertical du lanceur, ce par quoi la partie Bord et la partie Sol du module se séparent.

L'invention sera bien comprise et ses avantages apparaîtront mieux à la lecture de la description détaillée qui suit, d'un mode de réalisation de l'invention, faite en référence aux dessins annexés sur lesquels :
- la figure 1 illustre un lanceur muni d'un dispositif de séparation selon la présente invention,
- la figure 2 illustre le module d'avitaillement du lanceur, comportant un dispositif de séparation des parties bord et sol du module selon l'invention,
- la figure 3 illustre une éprouvette de maintien logée entre les parties bord et sol du module d'avitaillement de lanceur,
- la figure 4 est une vue éclatée du système de verrouillage du dispositif de séparation selon la présente invention,
- la figure 5 illustre l'ensemble de câbles reliant la partie sol du module d'avitaillement à la base de lancement,
- les figures 6A à 6C représentent les différentes étapes de fonctionnement du système d'actionnement du dispositif de séparation selon l'invention,
- la figure 7 illustre une zone de pivotement d'un module d'avitaillement de lanceur comportant un dispositif de séparation des parties bord et sol selon l'invention,
- la figure 8 illustre une variante de la zone de pivotement d'un module d'avitaillement de lanceur comportant un dispositif de séparation des parties bord et sol selon l'invention.

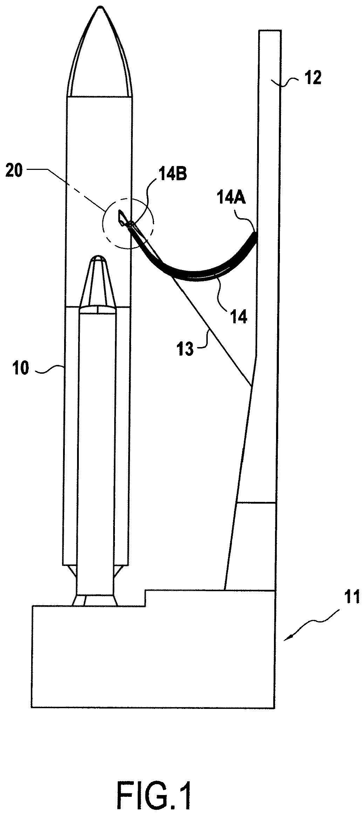

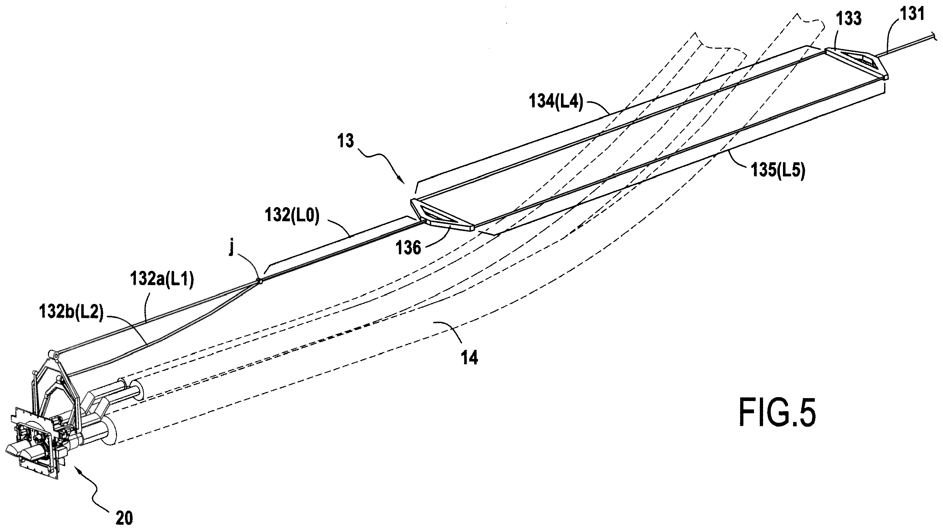

Sur la figure 1, on a représenté un lanceur 10 monté sur une base de lancement 11 et relié à un mât 12 de la base de lancement 11 par un ensemble de câbles 13, et par des ombilicaux 14 destinés à alimenter en ergol les réservoirs du lanceur. L'ensemble de câble 13 sera décrit plus en détail dans la suite, en référence à la figure 5. Les ombilicaux 14 sont reliés, à leur extrémité 14A, à une ligne d'alimentation (non représentée) située dans le mât 12 de la base de lancement 11, et, à leur extrémité 14B, à un module d'avitaillement 20 du lanceur 10.

Pour des raisons de simplification, le module d'avitaillement 20 sera dénommé « module » dans la suite de la description.

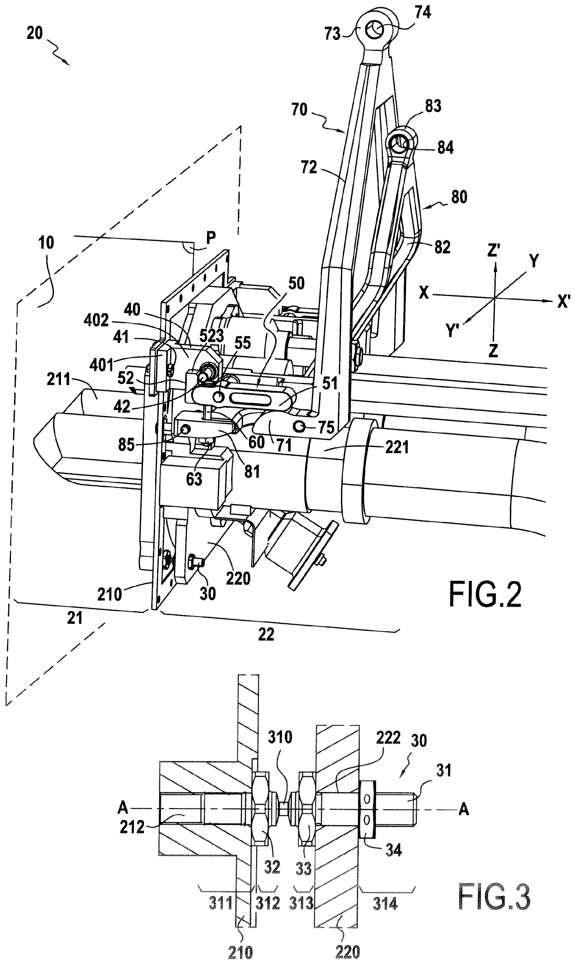

Le module est généralement décrit dans la suite en référence à l'un de ses côtés pris par rapport au plan médian P représenté sur la figure 2. On comprendra aisément que l'ensemble de ses caractéristiques peut être reproduit sur le côté opposé du module dans le cas où celui-ci est symétrique par rapport au plan P.

Comme illustré sur la figure 2, le module d'avitaillement 20 du lanceur 10 comprend une première partie dite « partie bord » 21, solidement fixée au lanceur 10, et une seconde partie dite « partie sol » 22, reliée au mât 12 de la base de lancement 11 par l'intermédiaire de l'ensemble de câbles 13 et des ombilicaux 14. La partie bord 21 du module d'avitaillement 20 comprend une pièce sensiblement plane dite « plaque de support côté bord » 210, fixée par vissage sur le capotage externe du lanceur 10, et des conduits d'alimentation 211 des réservoirs du lanceur. La partie sol 22 du module 20 comprend une pièce sensiblement plane dite « plaque de support côté sol » 220 et des manchons cylindriques 221 auxquels sont fixés les ombilicaux 14.

Lorsque le module d'avitaillement 20 se trouve dans sa position de travail, la plaque de support côté sol 220 est située en regard de la plaque de support côté bord 210 et les parties bord 21 et sol 22 du module 20 sont verrouillées entre elles. Il est prévu un ou plusieurs systèmes pour le maintien en position relative entre la plaque de support coté sol 220 et la plaque de support côté bord 210. Par exemple, un pion (non représenté) situé sur la plaque de support côté sol 220 coopère par complémentarité de forme avec un logement (non représenté) situé sur la plaque de support côté bord 210.

Par ailleurs, en partie basse du module, les parties bord 21 et sol 22 du module 20 sont maintenues en position par l'intermédiaire d'éprouvettes de maintien 30 fixées aux plaques de support bord et sol et qui permettent de conserver un certain parallélisme entre lesdites plaques.

Une éprouvette de maintien 30 est représentée en détail sur la figure 3. Elle est constituée d'un arbre 31 comportant plusieurs portions filetées et fixé à la plaque de support côté bord 210 d'une part et à la plaque de support côté sol 220 d'autre part.

A sa première extrémité, l'arbre 31 comporte une première portion filetée 311, vissée dans un trou fileté 212 de la plaque de support côté bord 210. L'arbre 31 est maintenu en position par l'intermédiaire d'un premier écrou 32 vissé sur une seconde portion filetée 312 de l'arbre 31. Selon une variante de réalisation de l'invention, l'arbre 31 et l'écrou 32 son monoblocs.

L'extrémité opposée de l'arbre 31 traverse un trou 222 formé dans la plaque de support côté sol 220. La plaque de support côté sol 220 est maintenue en position par rapport à la plaque de support côté bord 210 par l'intermédiaire d'un écrou 33 vissé sur une portion filetée 313 de l'arbre 31 située en regard de la plaque de support côté bord 210 et d'un écrou de serrage 34 vissé sur une portion filetée 314 de l'arbre 31 située sur le côté de la plaque de support côté sol 220 dirigé vers l'extérieur du module 20. Selon une variante de réalisation de l'invention, l'arbre 31 et l'écrou 33 sont monoblocs. Le premier et le second écrou 32, 33 sont de préférence des écrous six pans, pouvant être réglés par clé. Les variantes monoblocs permettent un montage sans réglage, avec une distance entre les plaques support côté Bord 210 et côté Sol 220 prédéfinie. Ce type de variante demande une bonne maîtrise des jeux entre pièces afin de minimiser les conséquences d'hyperstatismes éventuels (déformations tolérées des pièces).

L'arbre 31 comprend par ailleurs une portion rétrécie appelée « zone de rupture » 310, destinée à se rompre lors de la séparation des deux parties du module. Cette zone de rupture 310 est située sur la portion intermédiaire de l'éprouvette située entre les deux plaques de support 210 et 220. Cette portion intermédiaire constitue une zone d'accès pour une clé, permettant de régler le parallélisme et le jeu entre les plaques de support bord et sol du module 20 par serrage des écrous 32, 33, sans contraindre en torsion la zone de rupture 310. Dans le cas où l'arbre 31 et les deux écrous 32 et 33 forment un ensemble monobloc, l'assemblage des parties bord et sol du module s'effectue en serrant ledit ensemble monobloc sur la partie bord 21, en rapprochant la plaque de support côté Sol 220 de la plaque de support côté Bord 210 jusqu'à contact de ces plaques respectivement sur les écrous 32 et 33 et enfin par le passage d'une première clé dans la zone de rupture 310 afin de maintenir l'ensemble monobloc en position, sans sollicitation de ladite zone 310, et d'une deuxième clé pour le serrage de l'écrou 34.

En partie haute du module, les parties bord 21 et sol 22 du module 20 sont maintenues par un système de verrouillage comprenant un axe de verrouillage et une portion de blocage pouvant coopérer par engagement afin de maintenir la partie bord 21 et la partie sol 22 dans une position de verrouillage. En particulier, cet engagement empêche toute translation de la partie sol du module par rapport à la partie bord dans la direction X-X' définie sur la figure 2. Le système de verrouillage est suffisamment robuste pour assurer le maintien en position des deux parties du module lors des phases d'attente ou d'avitaillement. Lorsque l'avitaillement est achevé et que le lanceur s'est élevé d'une hauteur prédéterminée, ce système de verrouillage est débloqué par un système d'actionnement mécanique assurant la séparation des deux parties du module d'avitaillement, ledit système étant actionné sous l'effet des efforts de traction de l'ensemble de câbles.

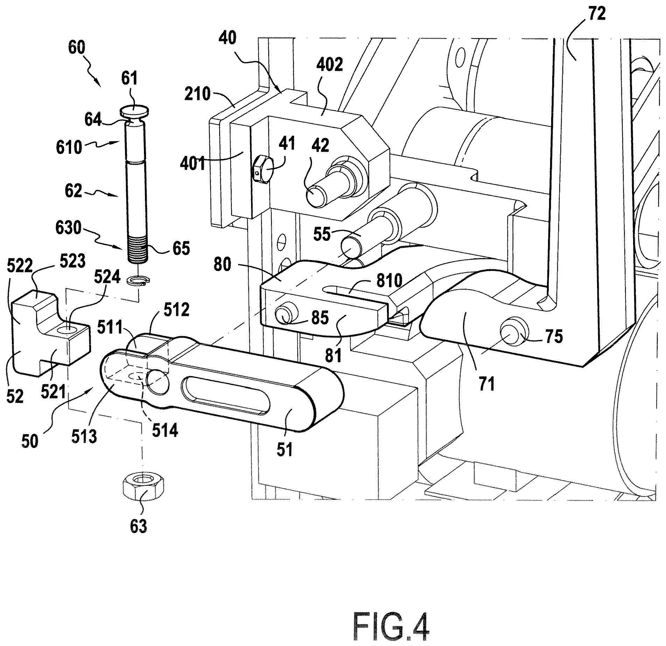

Le système de verrouillage est décrit dans la suite en référence aux figures 2 et 4.

Comme illustré sur les figures 2 et 4, un support d'axe de verrouillage 40 est fixé sur la plaque de support côté bord 210. Le support d'axe de verrouillage 40 est un élément en forme de T, comprenant une portion transversale 401 fixée sur la plaque de support côté bord 210 par l'intermédiaire de vis de réglage 41, et une portion longitudinale 402 présentant à son extrémité distale, sur sa face latérale dirigée vers l'extérieur du module 20, un axe de verrouillage 42 faisant saillie dans une direction Y-Y' sensiblement perpendiculaire au plan de symétrie P du module d'avitaillement 20.

En outre, comme représenté sur la figure 4, le système de verrouillage comprend un doigt de verrouillage 50 monté libre en rotation sur la partie sol 22 du module d'avitaillement 20. Le doigt de verrouillage 50 est constitué d'un premier segment 51 monté pivotant sur un axe matériel 55 de la partie sol 22 du module d'avitaillement 20 et d'un second segment 52 comportant une portion de blocage 523 destinée à coopérer avec l'axe de verrouillage 42 solidaire de la partie Bord lorsque le module se trouve dans sa position verrouillée. Le premier segment 51 du doigt de verrouillage 50 est un parallélépipède (approximatif) dans lequel un logement 511 a été ménagé par extrusion. Ce logement 511 est délimité en partie basse par une portion de surface inférieure 513 du premier segment 51 et, sur les côtés, par deux parties de chape latérales 512. Le second segment 52 du doigt de verrouillage 50 comprend une portion longitudinale 521 apte à venir se loger dans le logement 511, entre les parties de chape 512, et prolongée par une portion transversale 522 dont une extrémité forme la portion de blocage 523. Le premier segment 51 et le second segment 52 du doigt de verrouillage 50 sont reliés l'un à l'autre grâce à une goupille transverse 60 traversant un trou 514 prévu dans la portion de surface inférieure 513 du logement 511 du premier segment 51, et un trou 524 formé dans la portion longitudinale 521 du second segment 52, les trous 514 et 524 étant situés en regard l'un de l'autre lorsque les deux segments du doigt de verrouillage sont assemblés.

La portion de blocage 523 du doigt de verrouillage 50 coopère par engagement avec l'axe de verrouillage 42 de la partie bord 21 du module 20. Lorsque la portion de blocage 523 et l'axe de verrouillage 42 sont en contact, ils bloquent toute translation de la partie sol 22 par rapport à la partie bord, dans la direction X-X'. Les vis de réglage 41 qui fixent le support d'axe de verrouillage 40 permettent d'assurer le contact entre l'axe de verrouillage 42 et le doigt de verrouillage 50, et donc d'assurer le verrouillage des parties bord et sol du module 20, tout en évitant un montage sous contrainte. On notera que le réglage du verrouillage peut être ajusté ici par un système de cales ou de rondelle élastique.

Le système d'actionnement du dispositif de séparation des parties bord et sol du module d'avitaillement est décrit dans la suite en référence aux figures 2, 4 et 5.

La figure 2 illustre le dispositif de séparation des parties bord et sol du module 20 dans une position verrouillée permettant l'avitaillement des réservoirs. Le système d'actionnement comprend un levier d'entraînement 70 monté pivotant sur la partie sol 22 du module autour d'un axe matériel 75 parallèle à la direction Y-Y' et destiné, lorsqu'il est actionné, à faire pivoter le doigt de verrouillage 50 du système de verrouillage pour désengager la portion de blocage 523 de l'axe de verrouillage 42. Le levier d'entraînement 70 comprend une tête courte 71, présentant un profil bombé au moins sur la portion de sa périphérie qui est en contact avec la partie inférieure du doigt de verrouillage 50 durant la phase d'actionnement du levier d'entraînement 70. Cette portion bombée permet de conserver le contact avec le doigt de verrouillage 50 jusqu'à libération totale de l'axe 42 relativement à la portion de blocage 523 lors du pivotement du levier d'entraînement 70. Le levier d'entraînement 70 comprend en outre un manche de levier 72 sensiblement perpendiculaire à la tête de levier 71, ainsi qu'une poignée de levier d'entraînement 73 présentant un orifice 74 destiné à l'accrochage d'un câble de traction de l'ensemble de câble 13 relié au mât 12 de la base de lancement 11. Le levier d'entraînement 70 peut être actionné sous l'effet des efforts de traction de l'ensemble de câble 13, lorsque le lanceur s'est élevé d'une première hauteur suffisante H1.

Le système d'actionnement du dispositif de séparation des parties bord et sol du module d'avitaillement comporte en outre un levier d'extraction 80 monté pivotant autour d'un axe matériel 85 de la partie sol 22. Comme illustré sur les figures 2 et 4, le levier d'extraction 80 comporte, à une première extrémité, une fourche 81 dans laquelle est formée une fente 810. Le levier d'extraction 80 comprend par ailleurs, à son autre extrémité, un manche de levier d'extraction 82 incliné par rapport à la fourche 810, ainsi qu'une poignée de levier d'extraction 83 présentant un orifice 84 pour la fixation d'un câble de traction de l'ensemble de câble 13 relié au mât 12 de la base de lancement 11. D'une manière similaire au levier d'entraînement, le levier d'extraction peut être actionné sous l'effet des efforts de traction de l'ensemble de câble 13, pour une seconde hauteur H2 d'élévation du lanceur.

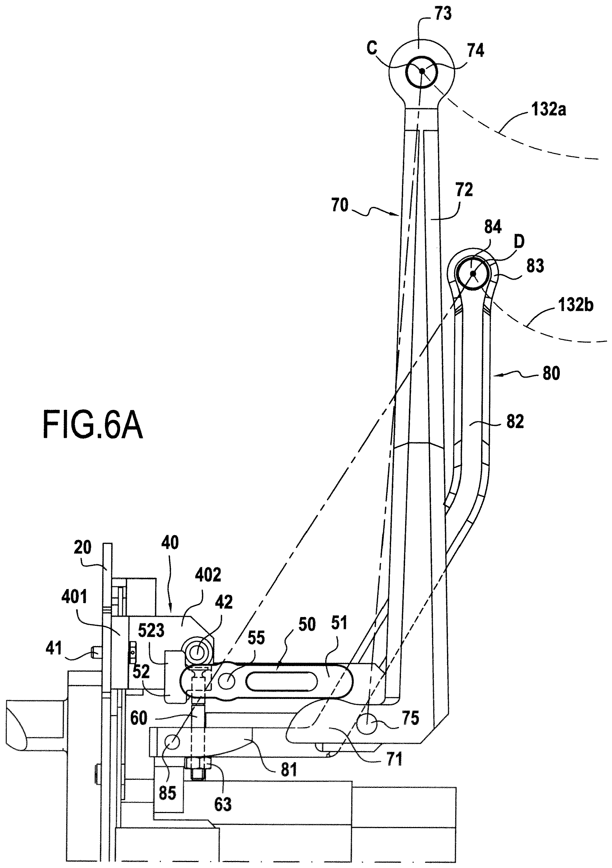

Le levier d'extraction 80 et le doigt de verrouillage 50 coopèrent par l'intermédiaire de la goupille 60 reliant les deux segments 51 et 52 du doigt de verrouillage 50. La portion d'extrémité supérieure 610 de la goupille 60 coopère avec les deux segments 51 et 52 du doigt de verrouillage 50. Elle comporte en outre une tête 61 permettant son bon positionnement à travers le doigt de verrouillage 50. La portion d'extrémité supérieure 610 de la goupille 60 est prolongée, du côté inférieur du doigt de verrouillage 50, par une portion médiane 62 destinée à coopérer avec la fente 810 de la fourche 81. Enfin, dans l'exemple de réalisation représenté sur la figure 2, un écrou 63 est vissé sur la portion d'extrémité inférieure 630 de la goupille 60 présentant un filetage correspondant 65. On notera que la portion médiane 62 de la goupille 60 s'étend, après montage (cf. figures 2 ou 6A), entre le côté inférieur du doigt de verrouillage 50 et le côté inférieur de la fourche 81. Selon d'autres variantes de réalisation de l'invention, tout autre système équivalent à l'écrou 63, formant obstacle et permettant de forcer le mouvement vertical de la goupille 60 lors de l'actionnement du levier d'extraction 80, peut être utilisé.

Les leviers d'entraînement 70 et d'extraction 80 sont reliés au mât 12 de la base de lancement 11 par l'ensemble de câble 13. Lorsque le lanceur s'élève, les câbles de l'ensemble de câble 13 se tendent, ce par quoi les leviers sont actionnés et le système de verrouillage est débloqué, de sorte que les parties bord et sol du module 20 peuvent se séparer.

L'ensemble de câbles 13 reliant le module d'avitaillement au mât de la base de lancement est représenté en détail sur la figure 5. Un premier câble principal 131, directement relié au mât 12 de la base de lancement 11, est relié à un premier guide en U 133. A une extrémité latérale de ce guide en U 133 est relié un premier câble intermédiaire 134 de longueur L4. A son autre extrémité latérale est relié un second câble intermédiaire 135 de longueur L5 égale à L4. Les câbles intermédiaires 134 et 135 sont reliés respectivement à l'une des extrémités latérales d'un second guide en U 136. A ce second guide en U 136 est relié un second câble principal 132 de longueur L0, qui se sépare, en un point de jonction J, en deux tronçons de câbles 132a et 132b. Le premier tronçon de câble 132a présente une longueur L1 et est relié à l'orifice 74 prévu à cet effet sur la poignée 73 du levier d'entraînement 70. Le second tronçon 132b présente une longueur L2 et est relié à l'orifice 84 prévu à cet effet sur la poignée 83 du levier d'extraction 80. Les longueurs L1 et L2 dépendent de la distance entre les orifices 74 et 84 des leviers 70 et 80 auxquels sont fixés les câbles 132a et 132b et des distances minimales d'élévation du lanceur H1 et H2. Selon une variante de réalisation de l'invention, deux câbles distincts sont utilisés, l'un étant relié directement du mât 12 de la base de lancement 11 à la poignée 73 du levier d'entraînement 70 et l'autre étant relié directement du mât 12 à la poignée 83 du levier d'extraction 80.

Les figures 6A à 6C représentent les différentes étapes de la séparation des parties bord et sol du module, selon un exemple de réalisation de l'invention.

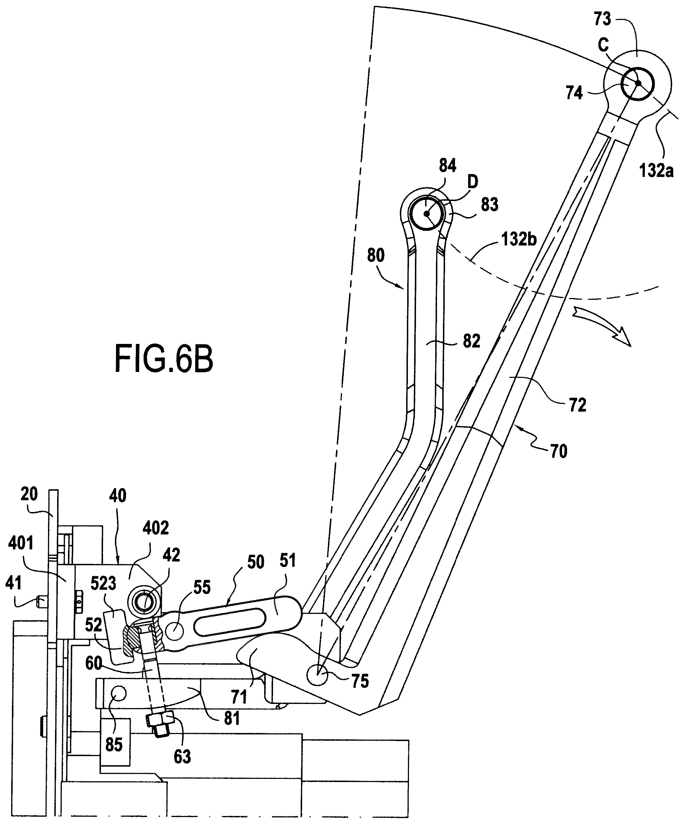

La figure 6A représente le dispositif de séparation des parties bord et sol du module 20 dans sa position verrouillée. Dans cette position, les câbles de l'ensemble de câble 13 sont lâches. La portion de blocage 523 du doigt de verrouillage 50 bloque le déplacement de la partie sol 22 du module 20 par l'intermédiaire de l'axe de verrouillage 42. Lorsque les moteurs de propulsion du lanceur 10 se mettent en marche et lorsque celui-ci entame son élévation, le premier tronçon de câble 132a se tend progressivement et, pour une première hauteur d'élévation H1 du lanceur 10, l'ensemble de câble 13 comprenant le tronçon de câble 132a est complètement tendu et le levier d'entraînement 70 est actionné sous l'effet de l'effort de traction de l'ensemble de câble 13. Cette étape est illustrée sur la figure 6B. Lorsque le levier d'entraînement 70 est abaissé, il pivote autour de son axe de rotation 75 dans le sens des aiguilles d'une montre et la tête 71 du levier d'entraînement 70 vient appuyer sur la face inférieure du premier segment 51 du doigt de verrouillage 50. De cette façon, le doigt de verrouillage 50 pivote dans le sens inverse des aiguilles d'une montre, autour de son axe de rotation 55, ce qui désengage la portion de blocage 523 de l'axe de verrouillage 42 et permet la séparation des parties bord 21 et sol 22 du module d'avitaillement 20. On notera que pour que la goupille 60, solidaire du doigt de verrouillage 50, puisse pivoter librement lorsque le doigt de verrouillage 50 pivote sous l'action du levier d'entraînement 70, le côté inférieur de la fourche 81 présente un profil bombé. De cette façon, l'écrou 63 vissé à l'extrémité de la goupille 60 peut longer la portion bombée de la fourche 81, sans entraver la rotation de la goupille 60 et donc du doigt de verrouillage 50.

Dans le cas éventuel (cas de panne) où le levier d'entraînement 70 serait bloqué lors de son actionnement, et en l'absence de tout dispositif de sécurité, il serait impossible d'assurer la bonne séparation des parties bord et sol du module d'avitaillement, ce qui pourrait, le cas échéant, causer des dommages considérables au lanceur. Pour pallier cette éventualité, le levier d'extraction 80 a été prévu comme second moyen d'actionnement susceptible de séparer les deux parties du module d'avitaillement 20 en cas de disfonctionnement ou de blocage du levier d'entraînement 70.

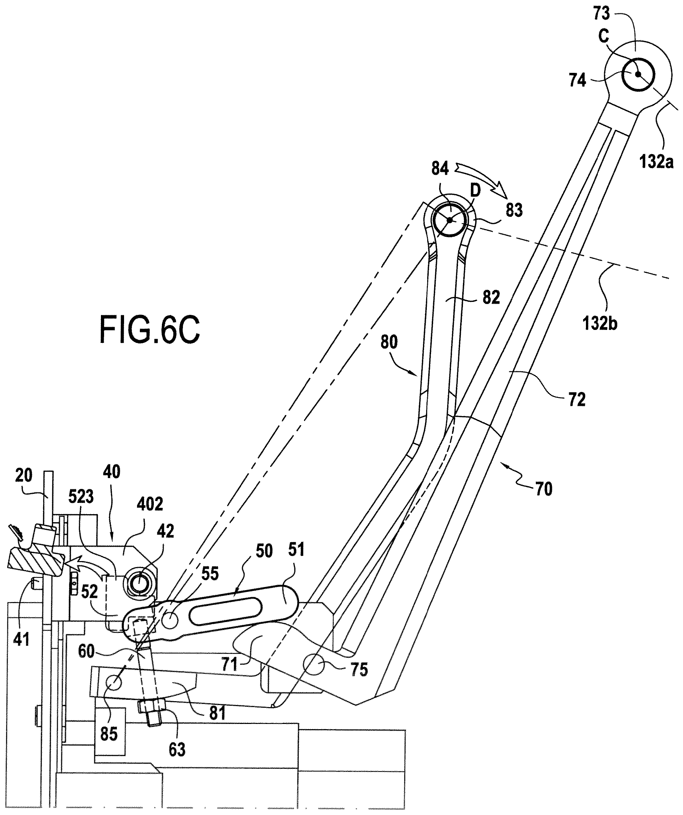

Le levier d'extraction 80 est actionné automatiquement à la suite du levier d'entraînement 70, sous l'effet des efforts de traction de l'ensemble de câble 13. En continuant son élévation après actionnement du levier d'entraînement, le lanceur 10 tend le second tronçon de câble 132b lié à la poignée 83 du levier d'extraction 80. Ainsi, pour une seconde hauteur d'élévation H2, supérieure à H1, du lanceur 10, le levier d'extraction 80 est abaissé. Le levier d'extraction 80 pivote alors dans le sens des aiguilles d'une montre autour de son axe matériel de rotation 85, entraînant la rotation de la fourche 81. En se déplaçant, la fourche 81 applique une force de traction sur la goupille 60 par l'intermédiaire de l'écrou 63, jusqu'à son extraction complète du doigt de verrouillage 50. La goupille 60 peut par exemple présenter au niveau de sa tête 61 (cf. figure 4), une zone de rupture 64 susceptible de se rompre dès le début de la traction. Selon un autre exemple de réalisation, la goupille 60 peut être amovible. Lorsque la goupille 60 est extraite du doigt de verrouillage 50, comme illustré sur la figure 6C, la liaison entre le premier et le second segment du doigt de verrouillage 50 n'est plus assurée. Par conséquent, le second segment 52 du doigt de verrouillage 50 se détache, et le blocage de la partie sol 22 du module 20 par la portion de blocage 523 est libéré. La partie sol 22 du module 20 bascule alors par rapport à la partie bord 21 sous l'action conjointe d'un éjecteur éventuel et de l'ensemble de câble 13. L'éjecteur permet un retrait plus rapide de la partie sol 22 du module 20 par rapport au lanceur 10 et favorise le basculement entre les deux parties 21 et 22. Le basculement de la partie Sol 22 entraîne la rupture quasi simultanée par traction et flexion des éprouvettes de maintien 30 placées en partie basse du module 20.

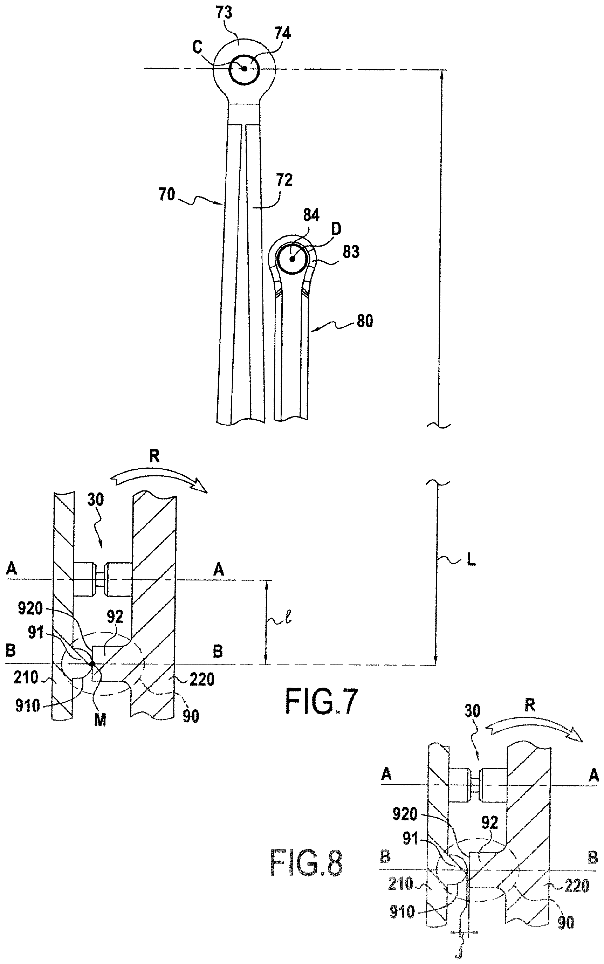

Le basculement est en outre facilité par une zone de pivotement 90 (représentée sur la figure 7) prévue sur les parties basses de la plaque de support côté bord 210 et de la plaque de support côté sol 220.

Comme illustré sur la figure 7, la zone de pivotement 90 est constituée d'un bossage longitudinal à section semi-cylindrique 91 formé sur la plaque de support côté bord 210 et d'une saillie longitudinale de section parallélépipédique 92 formée sur la plaque de support côté sol 220, en regard du bossage 91. Selon une variante de réalisation, la zone de pivotement peut également être constituée d'un ou plusieurs bossages semi-circulaires formés sur la partie Bord et d'une ou plusieurs saillies à profil parallélépipédique prévues sur la partie Sol et disposées, après montage, en regard du ou des dits bossages. Le contact entre la face plane 920 de la saillie 92 et la surface convexe 910 du bossage 91 permet une rotation (voir flèche R fig.7), et éventuellement une translation relative de la partie sol 22 par rapport à la partie bord 21.

La figure 7 est une vue en coupe de la partie basse du module 20. Le contact, entre le bossage 91 de la partie Bord et la saillie 92 de la partie Bord, est représenté sur la figure 7 par un point M, situé sur l'axe médian B du bossage 91 et de la saillie 92. En réalité, dans le cas où le bossage 91 et la saillie 92 s'étendent longitudinalement dans la direction Y-Y', la zone de contact entre le bossage 91 et la saillie 92 peut être linéaire. Pour la suite de la description, on définit l la distance entre le point de contact M (plus généralement la zone de contact) du bossage 91 et de la saillie 92 et l'axe médian A des éprouvettes 30. Par ailleurs, on définit L la distance entre le point de contact M (plus généralement la zone de contact entre le bossage 91 et la saillie 92) et l'axe de l'une des poignées 74 et 84. En fonctionnement normal, on considérera l'axe C de la poignée 74 du levier d'entraînement 70 et, en cas de panne, l'axe D de la poignée 84 du levier d'extraction 80. La rupture des éprouvettes est d'autant plus facilitée que le rapport entre les distances L/l est grand.

Pour éviter les problèmes éventuels d'hyperstatisme, il est nécessaire de prévoir un jeu minimum entre les deux parties du module, qui peut par exemple être choisi au niveau de la zone de pivotement 90, entre le bossage 91 côté bord et la saillie 92 côté sol, comme représenté sur la figure 8. Le montage est d'autant plus facile que le jeu J est important. Par contre, plus le jeu J est important, plus la séparation des parties Bord et Sol se fait lentement. En fonction des besoins (rapidité de séparation des deux parties de module, limitation des coûts...), il s'agit donc de trouver un compromis entre le rapport L/l et le rattrapage du jeu J entre les parties bord et sol du module (si possible proche de 0). Selon un autre exemple de réalisation, on peut également réaliser un réglage de la zone de basculement afin de rattraper les jeux ou choisir, lors de la fabrication du dispositif, des pièces à très faible jeu.

L'actionnement du dispositif de séparation se fait donc en deux temps. Le levier d'entraînement 70 est actionné pour une première hauteur H1 d'élévation du lanceur 10 et le levier d'extraction 80 est actionné automatiquement à la suite du levier d'entraînement 70 pour une hauteur d'élévation H2 supérieure à H1, de sorte que, même dans un cas où le levier d'entraînement 70 n'a pas fonctionné, la séparation des deux parties 21 et 22 du module d'avitaillement 20 est assurée. La démultiplication de l'effort de rupture dû à la traction des câbles est assurée par l'action des leviers 70 et 80 d'une part, et de la zone de pivotement 90 en partie basse du module 20 d'autre part.

De la description qui précède, on comprend qu'en fonctionnement normal, le levier d'entraînement 70 permet, à lui seul, de désengager la portion de blocage 523 de l'axe de verrouillage 42. En d'autres termes, il permet de désengager la portion de blocage 523 de l'axe de verrouillage 42 indépendamment du levier d'extraction 80.

On comprend en outre que le levier d'extraction 80 permet également de désengager la portion de blocage 523 de l'axe de verrouillage 42 même lorsque le levier d'entraînement 70 n'a pas fonctionné. Il permet donc, à lui-seul, indépendamment du levier d'entraînement 70, de désengager la portion de blocage 523 de l'axe de verrouillage 42.

## Revendications

1. Dispositif de séparation des parties Bord et Sol d'un module
d'avitaillement de lanceur, comprenant :
un système de verrouillage comportant un doigt de verrouillage (50) monté sur la partie Sol (22) et présentant une portion de blocage (523), et un axe de verrouillage (42) sur la partie Bord (21), coopérant par engagement avec la portion de blocage (523) afin de maintenir la partie Bord (21) et la partie Sol (22) dans une position de verrouillage, et
un système d'actionnement qui, sous le déplacement vertical du lanceur (10), permet de désengager la portion de blocage (523) de l'axe de verrouillage (42), ce par quoi la partie Bord (21) est apte à être séparée de la partie Sol (22),
**caractérisé en ce que** ledit système d'actionnement comporte un premier moyen d'actionnement (70) et un second moyen d'actionnement (80) permettant, indépendamment l'un de l'autre, de désengager la portion de blocage (523) de l'axe de verrouillage (42), et **en ce que** le second moyen d'actionnement (80) est actionné à la suite du premier moyen d'actionnement (70).

2. Dispositif de séparation selon la revendication 1, **caractérisé en ce que** le second moyen d'actionnement (80) qui permet de désengager la portion de blocage (523) de l'axe de verrouillage (42), constitue un élément de sécurité assurant la séparation des deux parties du module d'avitaillement du lanceur.

3. Dispositif de séparation selon la revendication 1 ou 2, **caractérisé en ce que**
le système d'actionnement comporte un levier d'entraînement (70) monté pivotant sur la partie Sol (22),
**en ce que** le doigt de verrouillage (50) est monté pivotant sur la partie Sol (22), et
**en ce que** le pivotement du levier d'entraînement (70) est apte à entraîner le pivotement du doigt de verrouillage (50), désengageant ainsi la portion de blocage (523) de l'axe de verrouillage (42) solidaire de la partie Bord (21).

4. Dispositif de séparation selon l'une quelconque des revendications 1 à 3, **caractérisé en ce que** le doigt de verrouillage (50) est constitué d'un premier segment (51) monté sur la partie Sol (22) et d'un second segment (52) comportant ladite portion de blocage (523), le premier et le second segment étant reliés par l'intermédiaire d'un élément de liaison (60).

5. Dispositif de séparation selon la revendication 4, **caractérisé en ce que** le système d'actionnement comprend un levier d'extraction (80) monté pivotant sur la partie Sol (22) et comportant une fourche (81) coopérant avec l'élément de liaison (60) du doigt de verrouillage (50) de manière à forcer le mouvement de l'élément de liaison (60) lors de l'actionnement du levier (80) et à extraire l'élément de liaison (60) du doigt de verrouillage (50), ce par quoi le premier et le second segment du doigt de verrouillage (50) peuvent être désolidarisés l'un de l'autre.

6. Dispositif de séparation selon la revendication 5, **caractérisé en ce que** la fourche (81) présente une fente (810) dans laquelle est engagée une portion médiane (62) de l'élément de liaison (60), et **en ce que** l'élément de liaison (60) est cassable ou amovible et comporte, à son extrémité inférieure, une portion d'extrémité élargie (63) faisant saillie du côté inférieur de la fourche.

7. Dispositif de séparation selon la revendication 1 ou 2, **caractérisé en ce que** le premier moyen d'actionnement (70) est sous la forme d'un levier d'entraînement et le second moyen d'actionnement (80) est sous la forme d'un levier d'extraction.

8. Dispositif de séparation selon la revendication 7, **caractérisé en ce que** le levier d'entraînement (70) est monté pivotant sur la partie Sol (22),
**en ce que** le doigt de verrouillage (50) est constitué d'un premier segment (51) monté pivotant sur la partie Sol (22) et d'un second segment (52) comportant ladite portion de blocage (523), le premier et le second segment étant reliés par l'intermédiaire d'un élément de liaison (60),
**en ce que** le pivotement du levier d'entraînement (70) est apte à entraîner le pivotement du doigt de verrouillage (50), désengageant ainsi la portion de blocage (523) de l'axe de verrouillage (42),
**en ce que** le levier d'extraction (80) est monté pivotant sur la partie Sol (22) et comporte une fourche (81) coopérant avec l'élément de liaison (60) du doigt de verrouillage (50) de manière à forcer le mouvement vertical de l'élément de liaison (60) lors de l'actionnement du levier d'extraction (80) et à extraire l'élément de liaison (60) du doigt de verrouillage (50), ce par quoi le premier et le second segment du doigt de verrouillage (50) peuvent être désolidarisés l'un de l'autre.

9. Dispositif de séparation selon la revendication 8, **caractérisé en ce que** la fourche (81) présente une fente (810) dans laquelle est engagée une portion médiane (62) de l'élément de liaison (60),
**en ce que** l'élément de liaison (60) est cassable ou amovible et comporte, à son extrémité inférieure, une portion d'extrémité élargie (63) faisant saillie du côté inférieur de la fourche (810), l'actionnement du levier d'extraction (80) permettant de retirer l'élément de liaison (60) du doigt de verrouillage (50) et de libérer ainsi la liaison entre le second segment (52) du doigt de verrouillage (50) et la partie Sol (22) du module d'avitaillement (20).

10. Dispositif de séparation selon l'une quelconque des revendications 1 à 9, **caractérisé en ce que** le système d'actionnement est relié à la base de lancement (11) par l'intermédiaire d'un câble (13), et est apte à être actionné sous l'effet de la traction du câble lorsque le lanceur (10) se déplace verticalement d'une distance prédéterminée.

11. Dispositif de séparation selon l'une quelconque des revendications 4, 5, 6, 8, 9, **caractérisé en ce que** l'élément de liaison (60) est une goupille.

12. Dispositif de séparation selon la revendication 6 ou 9 et la revendication 11, **caractérisé en ce que** la portion d'extrémité élargie (63) est constitué par un écrou vissé à l'extrémité inférieure de la goupille.

13. Dispositif de séparation selon la revendication 11 ou 12, **caractérisé en ce que** la goupille comporte une tête (61) assurant le positionnement de la goupille entre les deux segments du doigt de verrouillage (50) et apte à être rompue lorsque la goupille est extraite du doigt de verrouillage (50).

14. Dispositif de séparation selon la revendication 8 ou 9, **caractérisé en ce que** la surface inférieure de la fourche (81) du levier d'extraction (80) présente une forme bombée, permettant le pivotement de l'élément de liaison (60) dans le cas de l'actionnement du levier d'entraînement (70) préalablement à celui du levier d'extraction (80).

15. Dispositif de séparation selon l'une quelconque des revendications 1 à 14, **caractérisé en ce qu'**il comporte un système de positionnement des deux parties Bord et Sol du module (20) entre elles, sous forme d'éprouvettes de maintien (30) fixées aux deux parties du module (20) et à aptes à être rompues lors de la séparation des deux parties du module (20).

16. Dispositif de séparation selon l'une quelconque des revendications 1 à 15, **caractérisé en ce qu'**une zone de pivotement (90) est prévue sur les parties basses de la partie Bord (21) et de la partie Sol (22), ladite zone de pivotement comportant une première portion de pivotement (91) formée sur la partie Bord (21) et une seconde portion de pivotement (92) formée sur la partie Sol (22) et le contact entre la première portion de pivotement (91) et la seconde portion de pivotement (92) permettant une rotation et/ou une translation relative de la partie Sol (22) par rapport à la partie Bord (21) du module (20).

17. Procédé de séparation des parties Bord et Sol d'un module d'avitaillement de lanceur au moyen du dispositif de séparation selon l'ensemble des revendications 4, 5 et 10, **caractérisé en ce qu'**il comporte les étapes suivantes :
a) amorcer le déplacement vertical du lanceur (10),
g) actionner le levier d'extraction (80) sous l'effet de la force de traction du câble (13), lorsque le lanceur (10) s'est élevé d'une distance prédéterminée (H2),
h) forcer le mouvement de l'élément de liaison (60) par pivotement du levier d'extraction (80) jusqu'à retirer complètement l'élément de liaison (60) du doigt de verrouillage (50),
d) poursuivre le déplacement vertical du lanceur (10), ce par quoi la partie Bord (21) et la partie Sol (22) du module (20) se séparent.

18. Procédé de séparation des parties Bord et Sol d'un module d'avitaillement de lanceur au moyen du dispositif de séparation selon les revendications 8 et 10, **caractérisé en ce qu'**il comporte les étapes suivantes :
a) amorcer le déplacement vertical du lanceur (10),
e) actionner le levier d'entraînement (70) sous l'effet de la force de traction du câble, lorsque le lanceur (10) s'est élevé d'une première distance prédéterminée (H1), de manière à faire pivoter le doigt de verrouillage (50),
g) actionner le levier d'extraction (80) sous l'effet de la force de traction du câble, lorsque le lanceur (10) s'est élevé d'une seconde distance prédéterminée (H2) supérieure à la première distance (H1),
h) forcer le mouvement de l'élément de liaison (60) par pivotement du levier d'extraction (80) jusqu'à retirer complètement l'élément de liaison (60) du doigt de verrouillage (50),
d) poursuivre le déplacement vertical du lanceur (10), ce par quoi la partie Bord (21) et la partie Sol (22) du module (20) se séparent.

## Patentansprüche

1. Vorrichtung zur Trennung des Bord- und des Bodenteils eines Starterbetankungsmoduls, umfassend:
ein Verriegelungssystem, umfassend einen Verriegelungsfinger (50), der an dem Bodenteil (22) montiert ist und einen Blockierabschnitt (523) aufweist, und eine Verriegelungsachse (42) an dem Bordteil (21), die durch Einrücken in den Blockierabschnitt (523) zusammenwirkt, um den Bordteil (21) und den Bodenteil (22) in einer Verriegelungsstellung zu halten, und
ein Betätigungssystem, das bei vertikaler Bewegung des Starters (10) das Ausrücken des Blockierabschnitts (523) der Verriegelungsachse (42) erlaubt, wodurch der Bordteil (21) dazu geeignet ist, von dem Bodenteil (22) getrennt zu werden,
**dadurch gekennzeichnet, dass** das Betätigungssystem ein erstes Betätigungsmittel (70) und ein zweites Betätigungsmittel (80) umfasst, die es unabhängig voneinander erlauben, den Blockierabschnitt (523) aus der Verriegelungsachse (42) auszurücken, und dass das zweite Betätigungsmittel (80) im Anschluss an das erste Betätigungsmittel (70) betätigt wird.

2. Vorrichtung zur Trennung nach Anspruch 1, **dadurch gekennzeichnet, dass** das zweite Betätigungsmittel (80), das ein Ausrücken des Blockierabschnitts (523) aus der Verriegelungsachse (42) erlaubt, ein Sicherheitselement bildet, das die Trennung der zwei Teile des Starterbetankungsmoduls sicherstellt.

3. Vorrichtung zur Trennung nach Anspruch 1 oder 2, **dadurch gekennzeichnet, dass**
das Betätigungssystem einen Antriebshebel (70) umfasst, der schwenkbar an dem Bodenteil (22) montiert ist,
dass der Verriegelungsfinger (50) schwenkbar an dem Bodenteil (22) montiert ist, und
dass das Schwenken des Antriebshebels (70) dazu geeignet ist, das Schwenken des Verriegelungsfingers (50) anzutreiben, wodurch der Blockierabschnitt (523) aus der Verriegelungsachse (42), die mit dem Bordteil (21) fest verbunden ist, ausgerückt wird.

4. Vorrichtung zur Trennung nach einem der Ansprüche 1 bis 3, **dadurch gekennzeichnet, dass** der Verriegelungsfinger (50) aus einem ersten Segment (51), das an dem Bodenteil (22) montiert ist, und einem zweiten Segment (52) besteht, das den Blockierabschnitt (523) umfasst, wobei das erste und das zweite Segment mittels eines Verbindungselements (60) miteinander verbunden sind.

5. Vorrichtung zur Trennung nach Anspruch 4, **dadurch gekennzeichnet, dass** das Betätigungssystem einen Ausziehhebel (80) umfasst, der schwenkbar an dem Bodenteil (22) montiert ist und eine Gabel (81) umfasst, die mit dem Verbindungselement (60) des Verriegelungsfingers (50) auf solche Weise zusammenwirkt, dass sie die Bewegung des Verbindungselements (60) bei der Betätigung des Hebels (80) erzwingt und das Verbindungselement (60) aus dem Verriegelungsfinger (50) herauszieht, wodurch das erste und zweite Segment des Verriegelungsfingers (50) voneinander getrennt werden können.

6. Vorrichtung zur Trennung nach Anspruch 5, **dadurch gekennzeichnet, dass** die Gabel (81) einen Schlitz (810) aufweist, in welchen ein mittlerer Abschnitt (62) des Verbindungselements (60) eingerückt ist, und dass das Verbindungselement (60) abbrechbar oder abnehmbar ist und an seinem unteren Ende einen erweiterten Endabschnitt (63) umfasst, der über die untere Seite der Gabel hinausragt.

7. Vorrichtung zur Trennung nach Anspruch 1 oder 2, **dadurch gekennzeichnet, dass** das erste Betätigungsmittel (70) in Form eines Antriebshebels vorliegt und das zweite Betätigungsmittel (80) in Form eines Ausziehhebels vorliegt.

8. Vorrichtung zur Trennung nach Anspruch 7, **dadurch gekennzeichnet, dass** der Antriebshebel (70) schwenkbar an dem Bodenteil (22) montiert ist,
dass der Verriegelungsfinger (50) aus einem ersten Segment (51), das an dem Bodenteil (22) montiert ist, und einem zweiten Segment (52) besteht, das den Blockierabschnitt (523) umfasst, wobei das erste und das zweite Segment mittels eines Verbindungselements (60) miteinander verbunden sind,
dass das Schwenken des Antriebshebels (70) dazu geeignet ist, das Schwenken des Verriegelungsfingers (50) anzutreiben, wodurch der Blockierabschnitt (523) aus der Verriegelungsachse (42) ausgerückt wird,
dass der Ausziehhebel (80) schwenkbar an dem Bodenteil (22) montiert ist und eine Gabel (81) umfasst, die mit dem Verbindungselement (60) des Verriegelungsfingers (50) auf solche Weise zusammenwirkt, dass sie die vertikale Bewegung des Verbindungselements (60) bei der Betätigung des Ausziehhebels (80) erzwingt und das Verbindungselement (60) aus dem Verriegelungsfingers (50) herauszieht, wodurch das erste und zweite Segment des Verriegelungsfingers (50) voneinander getrennt werden können.

9. Vorrichtung zur Trennung nach Anspruch 8, **dadurch gekennzeichnet, dass** die Gabel (81) einen Schlitz (810) aufweist, in welchen ein mittlerer Abschnitt (62) des Verbindungselements (60) eingerückt ist,
dass das Verbindungselement (60) abbrechbar oder abnehmbar ist und an seinem unteren Ende einen erweiterten Endabschnitt (63) umfasst, der über die untere Seite der Gabel (810) hinausragt, wobei die Betätigung des Ausziehhebeis (80) es erlaubt, das Verbindungselement (60) aus dem Verriegelungsfinger (50) herauszuziehen und so die Verbindung zwischen dem zweiten Segment (52) des Verriegelungsfingers (50) und dem Bodenteil (22) des Betankungsmoduls (20) freizugeben.

10. Vorrichtung zur Trennung nach einem der Ansprüche 1 bis 9, **dadurch gekennzeichnet, dass** das Betätigungssystem mit der Startbasis (11) mittels eines Kabels (13) verbunden ist, und dazu geeignet ist, unter Wirkung der Traktion des Kabels betätigt zu werden, wenn der Starter (10) sich vertikal um einen vorbestimmten Abstand bewegt.

11. Vorrichtung zur Trennung nach einem der Ansprüche 4, 5, 6, 8, 9, **dadurch gekennzeichnet, dass** das Verbindungselement (60) ein Zapfen ist.

12. Vorrichtung zur Trennung nach Anspruch 6 oder 9 und Anspruch 11, **dadurch gekennzeichnet, dass** der erweiterte Endabschnitt (63) durch eine Mutter gebildet wird, die auf das untere Ende des Zapfens aufgeschraubt ist.

13. Vorrichtung zur Trennung nach Anspruch 11 oder 12, **dadurch gekennzeichnet, dass** der Zapfen einen Kopf (61) umfasst, der die Positionierung des Zapfens zwischen den zwei Segmenten des Verriegelungsfingers (50) sicherstellt und dazu geeignet ist, abgebrochen zu werden, wenn der Zapfen aus dem Verriegelungsfinger (50) herausgezogen wird.

14. Vorrichtung zur Trennung nach Anspruch 8 oder 9, **dadurch gekennzeichnet, dass** die untere Oberfläche der Gabel (81) des Ausziehhebels (80) eine bombierte Form aufweist, was das Schwenken des Verbindungselements (60) in dem Fall erlaubt, dass der Antriebshebel (70) vor dem Ausziehhebel (80) betätigt wird.

15. Vorrichtung zur Trennung nach einem der Ansprüche 1 bis 14, **dadurch gekennzeichnet, dass** sie ein System zur Positionierung der zwei Bord- und Bodenteile des Moduls (20) relativ zueinander umfasst, in Form von zwei Halteröhrchen (30), die an den zwei Teilen des Moduls (20) montiert und dazu geeignet sind, bei der Trennung der zwei Teile des Moduls (20) abgebrochen zu werden.

16. Vorrichtung zur Trennung nach einem der Ansprüche 1 bis 15, **dadurch gekennzeichnet, dass** ein Schwenkbereich (90) auf den unteren Teilen des Bordteils (21) und des Bodenteils (22) vorgesehen ist, wobei der Schwenkbereich einen ersten Schwenkabschnitt (91), der an dem Bordteil (21) ausgebildet ist, und einen zweiten Schwenkabschnitt (92) umfasst, der an dem Bodenteil (22) ausgebildet ist, und der Kontakt zwischen dem ersten Schwenkabschnitt (91) und dem zweiten Schwenkabschnitt (92) eine relative Drehung und/oder eine relative Verschiebung des Bodenteils (22) in Bezug auf den Bordteil (21) des Moduls (20) erlaubt.

17. Verfahren zur Trennung des Bord- und des Bodenteils eines Starterbetankungsmoduls mittels der Vorrichtung zur Trennung nach der Kombination der Patentansprüche 4, 5 und 10, **dadurch gekennzeichnet, dass** es die folgenden Schritte umfasst:
a) Aktivieren der vertikalen Bewegung des Starters (10),
g) Betätigen des Ausziehhebels (80) unter Wirkung der Traktionskraft des Kabels (13), wenn der Starter (10) sich um einen vorbestimmten Abstand (H2) angehoben hat,
h) Erzwingen der Bewegung des Verbindungselements (60) durch Schwenken des Ausziehhebels (80) bis zum vollständigen Herausziehen des Verbindungselements (60) aus dem Verriegelungsfinger (50),
d) Fortsetzen der vertikalen Bewegung des Starters (10), wodurch sich der Bordteil (21) und der Bodenteil (22) des Moduls (20) voneinander trennen.

18. Verfahren zur Trennung des Bord- und des Bodenteils eines Starterbetankungsmoduls mittels der Vorrichtung zur Trennung nach den Patentansprüchen 8 und 10, **dadurch gekennzeichnet, dass** es die folgenden Schritte umfasst:
a) Aktivieren der vertikalen Bewegung des Starters (10),
e) Betätigen des Antriebshebels (70) unter Wirkung der Traktionskraft des Kabels, wenn der Starter (10) sich um einen ersten vorbestimmten Abstand (H1) angehoben hat, auf solche Weise, dass der Verriegelungsfinger (50) zum Schwenken veranlasst wird,
g) Betätigen des Ausziehhebels (80) unter Wirkung der Traktionskraft des Kabels, wenn der Starter (10) sich um einen zweiten vorbestimmten Abstand (H2) angehoben hat, der größer ist als der erste Abstand (H1),
h) Erzwingen der Bewegung des Verbindungselements (60) durch Schwenken des Ausziehhebels (80) bis zum vollständigen Herausziehen des Verbindungselements (60) aus dem Verriegelungsfinger (50),
d) Fortsetzen der vertikalen Bewegung des Starters (10), wodurch sich der Bordteil (21) und der Bodenteil (22) des Moduls (20) voneinander trennen.

## Claims

1. A separator device for separating the on-board and ground portions of a launcher fueling module, the device comprising:
a locking system having a locking finger (50) mounted on the ground portion (22) and presenting a blocking portion (523), and a locking pin (42) on the on-board portion (21) co-operating by engaging with the blocking portion (523) in order to hold the on-board portion (21) and the ground portion (22) in a locking position; and
an actuation system that, under vertical movement of the launcher (10), enables the blocking portion (523) to be disengaged from the locking pin (42), whereby the on-board portion (21) is suitable for being separated from the ground portion (22),
the separator device being **characterized in that** said actuation system comprises a first actuation means (70) and a second actuation means (80), which are capable, independently of each other, of disengaging the blocking portion (523) from the locking pin (42) and **in that** the second actuation means (80) is actuated after the first actuation means (70).

2. A separator device according to claim 1, **characterized in that** the second actuation means (80), which serves to disengage the blocking portion (523) from the locking pin (42), constitutes a safety element enabling the two portions of the launcher fueling module to be separated.

3. A separator device according to claim 1 or 2, **characterized in that**:
the actuation system comprises a drive lever (70) pivotally mounted on the ground portion (22);
the locking finger (50) is pivotally mounted on the ground portion (22); and
the pivoting of the drive lever (70) is suitable for driving pivoting of the locking finger (50), thereby disengaging the blocking portion (523) from the locking pin (42) secured to the on-board portion (21).

4. A separator device according to any one of claims 1 to 3, **characterized in that** the locking finger (50) is constituted by a first segment (51) mounted on the ground portion (22) and a second segment (52) including said blocking portion (523), the first and second segmentsbeing connected together by means of a connection element (60).

5. A separator device according to claim 4, **characterized in that** the actuation system comprises an extraction lever (80), which is pivotally mounted on the ground portion (22) and includes a fork (81) co-operating with the connection element (60) of the locking finger (50) in such a manner as to force movement of the connection element (60) during actuation of the extraction lever (80) and to extract the connection element (60) from the locking finger (50), whereby the first and second segments of the locking finger (50) can be separated from each other.

6. A separator device according to claim 5, **characterized in that** the fork (81) presents a slot (810) in which a middle portion (62) of the connection element (60) is engaged, and **in that** the connection element (60) is breakable or removable and includes at its bottom end an enlarged end portion (63) projecting at the underside of the fork.

7. A separator device according to claim 1 or 2, **characterized in that** the first actuation means (70) is in the form of a drive lever, and the second actuation means (80) is in the form of an extraction lever.

8. A separator device according to claim 7, **characterized in that**:
the drive lever (70) is pivotally mounted on the ground portion (22);
the locking finger (50) is constituted by a first segment (51) pivotally mounted on the ground portion (22) and a second segment (52) including said blocking portion (523), the first and second segments being connected together by means of a connection element (60);
the pivoting of the drive lever (70) is suitable for driving pivoting of the locking finger (50), thereby disengaging the blocking portion (523) from the locking pin (42); and
the extraction lever (80) is pivotally mounted on the ground portion (22) and includes a fork (81) co-operating with the connection element (60) of the locking finger (50) in such a manner as to force vertical movement of the connection element (60) during actuation of the extraction lever (80) and to extract the connection element (60) from the locking finger (50), whereby the first and second segments of the locking finger (50) can be separated from each other.

9. A separator device according to claim 8, **characterized in that**:
the fork (81) presents a slot (810) in which a middle portion (62) of the connection element (60) is engaged; and
the connection element (60) is breakable or removable and includes, at its bottom end, an enlarged end portion (63) projecting at the underside of the fork (810), actuation of the extraction lever (80) enabling the connection element (60) to be extracted from the locking finger (50) and thereby releasing the connection between the second segment (52) of the locking finger (50) and the ground portion (22) of the fueling module (20) .

10. A separator device according to any one of claims 1 to 9, **characterized in that** the actuation system is connected to the launch pad (11) via a cable (13), and is suitable for being actuated under the effect of traction from the cable when the launcher (10) moves vertically through a predetermined distance.

11. A separator device according to any one of claims 4, 5, 6, 8, 9, **characterized in that** the connection element (60) is a bolt.

12. A separator device according to claim 6 or claim 9 together with claim 11, **characterized in that** the enlarged end portion (63) is constituted by a nut screwed onto the bottom end of the bolt.

13. A separator device according to claim 11 or claim 12, **characterized in that** the bolt has a head (61) serving to position the bolt between the two segments of the locking finger (50) and suitable for being broken when the bolt is extracted from the locking finger (50).

14. A separator device according to claim 8 or claim 9, **characterized in that** the bottom surface of the fork (81) of the extraction lever (80) presents a rounded shape enabling the connection element (60) to pivot in the event of the drive lever (70) being actuated prior to the extraction lever (80) being actuated.

15. A separator device according to any one of claims 1 to 14, **characterized in that** it includes a system for positioning the on-board and ground portions of the module (20) relative to each other, said system being in the form of support shear pins (30) fastened to the two portions of the module (20) and suitable for being broken during separation of the two portions of the module (20).

16. A separator device according to any one of claims 1 to 15, **characterized in that** a pivot zone (90) is provided at the bottom portions of the on-board and ground portions (21, 22), said pivot zone comprising a first pivot portion (91) formed on the on-board portion (21) and a second pivot portion (92) formed on the ground portion (22), with contact between the first and second pivot portions (91, 92) enabling pivoting and/or relative movement in translation of the ground portion (22) relative to the on-board portion (21) of the module (20).

17. A method of separating the on-board and ground portions of a launcher fueling module by means of the separator device according to claims 4, 5, and 10 taken together, the method being **characterized in that** it comprises the following steps:
a) initiating vertical movement of the launcher (10) ;
g) actuating the extraction lever (80) under the effect of the traction force from the cable (13) when the launcher (10) has lifted off through a predetermined distance (H2);
h) forcing the connection element (60) to move by pivoting the extraction lever (80) until the connection element (60) is fully withdrawn from the locking finger (50); and
d) continuing the vertical movement of the launcher (10), whereby the on-board and ground portions (21, 22) of the module (20) are separated.

18. A method of separating the on-board and ground portions of a launcher fueling module by means of the separator device according to claims 8 and 10, the method being **characterized in that** it comprises the following steps:
a) initiating vertical movement of the launcher (10) ;
e) actuating the drive lever (70) under the effect of the traction force from the cable when the launcher (10) has lifted off through a first predetermined distance (H1), so as to cause the locking finger (50) to pivot;
g) actuating the extraction lever (80) under the effect of the traction force from the cable when the launcher (10) has lifted off through a predetermined distance (H2) higher than the first distance (H1) ;
h) forcing the connection element (60) to move by pivoting the extraction lever (80) until the connection element (60) is fully withdrawn from the locking finger (50); and
d) continuing the vertical movement of the launcher (10), whereby the on-board and ground portions (21, 22) of the module (20) are separated.
